# EUROPEAN PATENT SPECIFICATION

(11) **EP 2 509 442 B1**
(45) Date of publication and mention of the grant of the patent: **30.04.2014**
(21) Application number: 10784811.1
(22) Date of filing: 02.12.2010
(51) Int. Cl.: A23L 2/54, A23L 2/68, A23C 9/152, A23C 9/154, A23L 1/00, A23L 1/0524

(54) **A SPOONABLE SPARKLING JELLIFIED FOOD PRODUCT**
LÖFFELBARES MOUSSIERENDES GELIERTES LEBENSMITTEL
PRODUIT ALIMENTAIRE ÉPAIS GÉLIFIÉ ET GAZEUX

(30) Priority: 09.12.2009 EP 09178472
(43) Date of publication of application: 17.10.2012
(73) Proprietor: Nestec S.A., 1800 Vevey (CH)
(72) Inventor: CHEVALIER, Jean-François, F-14100 Courtonne la Meurdrac (FR); MARCILLA, Rafael, F-14100 Lisieux (FR); KNAUF, Hermann, F-14100 Lisieux (FR)
(74) Representative: Cogniat, Eric Jean Marie
(86) International application number: PCT/EP2010/068742
(87) International publication number: WO 2011/069886

(56) References cited:
- WO-A1-96/19925
- US-A- 3 826 829
- US-A- 4 919 960

## Description

### Field of the invention

The present invention concerns spoonable gas containing products having a gel texture. In particular, it relates to food products comprising a gas and having a gel texture which exhibit a pleasant sparkling effect in the mouth when consumed as a gel food product. The present invention also concerns a process for the preparation of a spoonable gas containing food product having a gel texture.

### Background of the invention

Drinkable gas containing beverages are well known to everybody. Examples of drinkable gas containing beverages are carbonated soft drinks such as lemonades. Further, carbonated milk products are available on the market. In addition, carbonated drinks on the basis of fruit juices and vegetable extracts are also well accepted by the consumers.

The above drinks and beverages are liquid and do not contain any thickening agents. In the meantime gel-like, but still flowable, carbonated drinks and beverages have been described. A beverage having a light gel structure is described in WO 98/04158. These beverages contain a certain amount of a gelling agent. EP 0796046 B1 describes a carbonated spoonable semi-solid cultured yoghurt product which may contain gums as a thickener.

It is object of the present invention to provide a spoonable gas containing food product having a gel texture with an improved stability to provide a pleasant sparkling mouth-feel upon consuming the food product.

It is a further object of the present invention to provide an economic process for the manufacture of a spoonable gas containing food product having a stable gel texture.

### Summary of the invention

The above objects are solved by means of the independent claims. The dependent claims relate to preferred embodiments of the subject-matter of the independent claims.

claims. Thus, in a first aspect, the invention relates to a spoonable gas containing food product having a gel texture comprising a pectin, an acid, a liquid and a gas wherein the pH of the composition is in a range of 2.5 to 5.0 and the structure of the gel is such that the gas bubbles are trapped in the gel matrix.

A second aspect of the present invention concerns a process for the preparation of a spoonable gas containing food product having a gel texture wherein the gas bubbles are trapped in the gel matrix, comprising the steps of: mixing pectin, an acid, a liquid and optionally at least one of sweeteners and flavoring agents; pasteurizing the mixture; injecting the gas to form a gas containing product; holding the gas containing product for a period between 0.25 to 5, preferably 0.5 to 2.5 minutes; storing the product under isobaric conditions and filling the product in containers under non-isobaric conditions while simultaneously adding 0,01 to 1 wt.-% of an acid.

### Brief description of the drawings

Additional features and advantages of the present invention are described in, and will be apparent from, the description of the presently preferred embodiments which are set out below with reference to the drawing in which:

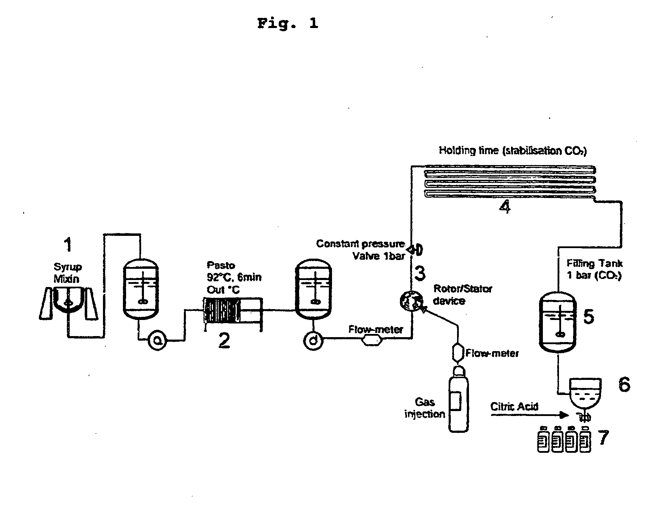

**Figure 1** is a process diagram illustrating a way how to produce the spoonable gas containing food product of the present invention.

### Detailed description of the invention

The spoonable gas containing food product of the present invention has a gel texture in which the gas bubbles are trapped in the gel matrix. In this condition, the gas bubbles are uniformly distributed (dissolved) in the gel matrix providing a proper absorption of the gas in the food product. The gas bubbles are solved in the matrix and thus present in a gel condition.

By "spoonable" product, it is meant a product that has a viscosity higher than 2000 centipoises, preferably a viscosity comprised between 20 000 and 300 000 centipoises measured in a Brookfield viscosimeter with module 93-C at a speed of 5RPM at 8°C. Such gel properties guarantee that the product can be spooned, i.e. that portions of product can be cut and separated from the rest of the product, and that the spooned portion will not flow from the spoon during consumption.

When the gel food product is subjected to a certain type of stress, for example during eating, the bubbles in the food products exhibit a sparkling effect. The consumers experience this sparkling effect as a very pleasant mouth-feel combined with a freshness aspect.

It is essential to the spoonable gas containing food product of the present invention that the pH of the food product is clearly in the acid range. It has been found that the pectin in the product sensitively reacts to the pH. A decrease of pH increases the consistency of the gel, hence the stability of the gas bubbles trapped into the gel matrix, which allows to achieve a high overrun, in other words a high content of gas into the gel matrix. In other words, the lower the pH is, the higher is the degree of jellification; and the higher the sparkling effect in the consumer's mouth. According to the present invention, the pH of the composition is in a range of 2.5 to 5.0. Preferably, the pH is in a range of 3 to 4.5, with a range of 3.5 to 4.0 being more preferred.

Interestingly, the product according to the invention is such that when exposed at atmospheric pressure, the gas contained thereinto is not expelled out of the gel matrix, and the size of the gas bubbles is such that they are not visible for the human eye, i.e. the product looks still. However, when in the mouth, the consumer can realize that this gel product has a strong sparkling mouthfeel, due to the high amount of gas that is trapped into the gel matrix.

The possibility to entrap a high quantity of gas into the gel matrix, with gas bubble diameter such that the product looks like a still product is allowed and guaranteed by the high gel strength and viscosity properties of the gel. This is also an effect of the high stability of the gel matrix, which is due particularly to the acidic pH of the product.

The spoonable gas-containing food product of the present invention comprises a pectin as a gelling agent to provide the gel characteristic of the product. The pectin that is suitable for the food product of the present invention is a high methylated pectin (HM pectin) or a low methylated pectin (LM pectin). The amount of the pectin contained in the food product of the present invention is from 0.1 to 5.0 wt.-%, preferably 0.5 to 2.5 wt.-%, with a range of 1.0 to 2.0 wt.-% being most preferred.

The food product of the present invention also comprises an acid to adjust the pH in the required range. The presence of an acid in the food product of the present invention causes pH reduction which allows a better solution of the gas in the product. In addition, an acid pH contributes to a refreshing sensation and also works as a product preservative.

The amount of the acid in the product is 0.01 to 1.0 wt.-%, preferred 0.1 to 0.5 wt.-%, most preferred 0.2 to 0.4 wt.-%.

The liquid providing the matrix - in combination with the pectin - for the gas of the spoonable gas containing food product, is contained in an amount of 70.0 to 95.0 wt.-%, preferred 80 to 90 wt.-%, with 85 to 88 wt.-% being most preferred.

A gas is added to the spoonable food product of the present invention to provide the sparkling effect. The concentration of gas in the product is 1.0 to 10 g/l, preferred 2.0 to 5.0 g/l and most preferred 2.0 to 4.0 g/l.

The acid contained in the food product of the present invention may be any food-grade organic or inorganic acid. The organic acid is preferably selected from citric acid, acetic acid, lactic acid and mixtures thereof, with citric acid being more preferred.

The inorganic acids may be any inorganic acid which is of food-grade quality. Examples of inorganic acids are phosphoric acid, carbonic acid and mixtures thereof, wherein phosphoric is the more preferred.

The majority of the spoonable gas containing food product of the present invention consists of a liquid base which can be any liquid suitable for forming a gel food product. Preferably, the liquid base is selected from water, fruit juice, fruit pulp, coffee, tea, milk and derivates, soy based drinks, natural extracts, chocolate based drinks or smoothies, with water and fruit juice being more preferred.

The food product of the present invention is gasified to impart the sparkling effect to the product. Any gas that is appropriate for food purposes may be contained in the product of the invention. Suitable gases are, for example, CO₂, N₂, O₂, atmospheric air (preferably filtered), or a combination thereof.

If appropriate, the spoonable gas containing food product of the present invention may also comprise up to 20 wt.-%, preferably 3.0 to 15.0, more preferred 10 to 13 wt.% of a natural sugar. It can also contain, alternatively or in additional to natural sugar, at least one high intensity sweetener, either natural or artificial. Examples of natural sugars are saccharose, all type of syrup glucose or syrup fructose. As examples of artificial sweeteners are mentioned natural extracts of stevia, or rebaudioside A, aspartame, acesulfame, sucralose, saccharin, neotame. The quantities of high intensity artificial or natural sweeteners are much less than for natural sugars mentioned before. The reason is these sweeteners have a high sweetening power (between 50 and 2000 times that of sucrose (cane sugar)) and therefore a smaller quantity is necessary to achieve a similar sweetening effect.

Mixtures of natural sugars and artificial sweeteners are also appropriate.

If desired, the food product of the present invention may also comprise up to 2.0 wt.-%, preferably 0.1 to 1.0 wt.-% of a flavoring agent. Usually, the flavoring agent is one or a combination of food-grade flavoring agents used in soft-drinks applications which is selected from lemon flavor, orange flavor, raspberry flavor, cola flavor, banana flavor, coffee flavor or blackcurrant flavor.

The spoonable gas containing food product of the present invention may be an alcohol-free food product or a food product which contains alcohol. An alcoholic food product may further contain up to 10 wt.-%, preferably 4.5 to 8 wt.-% of ethanol.

In a preferred embodiment of the present invention, the food product may further comprise additives such as vitamins, minerals and probiotics.

The spoonable gas containing food product of the present invention can be a dessert, snack, carbonated product, preferably a carbonated product. Examples are carbonated products on the basis of water, flavored or not flavored, fruit juice, vegetables and an alcoholic fruit juice.

The spoonable gas containing food product having a gel texture of the invention can be produced by a process using the injection of a liquid gas such as liquid CO₂.

The process comprises the steps of mixing, heat treatment, gas injection, holding time, isobaric storage and non-isobaric filling.

In detail, one way of manufacturing the food products of the present invention is a process, as shown in **Figure 1** that comprises the following steps:
1. Mixing :
   The ingredients such as pectin, an acid, a liquid and optionally at least one of the sweeteners and flavoring agents are mixed with standard agitation in a conventional mixing machine.
2. Heat treatment :
   Thereafter, a standard pasteurization of the above mixture is performed. The temperature is set at 85 to 140°C, preferably about 90°C during a period of 15 sec. to 10 min , preferably 6 to 8 minutes followed by a temperature decrease of 8°C.
3. Gas injection :
   A gas, for example CO₂ is injected in a rotor-stator device at a continuous temperature of 2 to 30 °C, preferably 6 to 10°C. The amount of injected CO₂ is regulated according to the flow of the pasteurized pre-mixed product. A control pressure valve is provided that ensures the holding time and a proper absorption of the gas by the product at the outlet of the rotor-stator system. The working pressure in the control pressure valve is 50 to 400, preferably 80 to 200 kPa.
4. Holding time :
   This step is provided to ensure a proper absorption of the gas in the liquid. This is first achieved after a suitable contact between the two phases. The holding time is set in a range of between 0.25 to 5, preferably 0.5 to 2.5, most preferably 0.5 to 1.5 minutes.
5. Isobaric storage :
   The stabilized product is stored in an isobaric tank previous to the filling step, having a head space pressure of 50kPa to 400 kPa. The temperature remains constant.
6. Non-isobaric filling :
   The filling is carried out by a non-isobaric filling system which can be carried out under aseptic conditions. Supplementary acid is added to achieve a total quantity of 0.01 to 1 wt.-%, preferably 0.1 to 0.5 wt.-%, more preferred 0.2 to 0.4 wt.-% in the product and also to reach the desired level the level of jellification. It should be noted that if in the storing tank the pressure is 1 bar internally, the total pressure would be the atmospheric pressure (outside of the storing tank) plus 1 bar in the internal tank. In other words, the manometric pressure measured inside the storing tank is a relative pressure.

The total acid in the recipe is about 0,01 to 1 wt.-%. A part of it is added during mixing and the rest is added during filling with the aim to finish the jellification of the product in this step and to trap the gas in the matrix. In other words, a total amount of acid between 0,01 to 1% is required to achieve the jellification. The amount added at the final step only complements the total; therefore this amount depends on the amount added in the first stage.

Once the product is finally filled, the product is stored at a temperature of between 2 to 12°C for at least 45 days without losing gas under maintaining the gel texture.

In a preferred embodiment of the process of the invention, in the mixing step, an acid selected from organic and inorganic acids, for example those as mentioned above, a liquid selected from water, fruit juice, fruit pulp, coffee, tea, milk, soy based drinks, natural extracts, chocolate based drinks or smoothies and a gas selected from CO₂, N₂, O₂ and mixtures thereof are used.

In the step of gas injection, a CO₂ stream is preferably used to produce a carbonated spoonable gel food product of the invention that exhibits an excellent sparkling effect.

The product of the present invention is filled up in suitable containers such as cans and cups made of aluminum, glass or plastic. After filling, the containers are airtightly sealed according to standard procedures.

The process described provides a stable gas containing food product having a gel structure. The stable gel structure is achieved by the high dissolution of the gas in the gel matrix as the gas bubbles are trapped in the matrix. The product remains stable in the container for at least 45 days in cooled environments of 2 to 12°C.

The present invention is illustrated below by means of the non-limiting examples.

### Example 1

The following ingredients are mixed in the described proportions:

| **Ingredients** | **Dosage** | **%** |
|---|---|---|
| Water | 52,03 | 86,58% |
| White sugar | 7,18 | 11,95% |
| Pectin | 0,66 | 1,10% |
| Citric Acid | 0,13 | 0,22% |
| Raspberry Flavor | 0,09 | 0,15% |

The ingredients are mixed with standard agitation at a temperature of about 30°C.

The pH of the product (mixture) is comprised between 2.5 and 5.0, preferably from 3.5 to 4.5.

After mixing, a standard pasteurization at a temperature of 92°C during 6 minutes is performed followed by a temperature decrease of 8°C.

Thereafter, CO₂ is injected in a rotor-stator device at a continuous temperature of 8°C. The amount of injected CO₂ is regulated according to the flow of the pre-mixed product. The working pressure in the control pressure valve is 100kPa. The final concentration of CO₂ gas in the product is 1.5 to 5 g/L (Measured with Steinfurth equipment).

Thereafter, a holding time (stabilization time) is performed for a period of 15 seconds to 5 minutes.

The product is stored in an isobaric tank having a head space pressure of 100kPa. Thereafter the product is filled in plastic bottles using a non-isobaric filler system. Further, 0.17% wt. of citric acid is added. The bottled products are stored at 5°C.

The product has been tested and found to be a raspberry-taste refreshing dessert that exhibits a pleasant sparkling mouth-feel when consumed.

It was demonstrated that outside of the pH range disclosed and claimed in the present application, the CO₂ cannot be dissolved in such chemical state; it becomes carbonic acid and therefore the final product becomes very acid, and cannot be consumed.

## Claims

1. A spoonable gas-containing food product having a gel texture, comprising 0.1 to 5.0 wt.-% of pectin, 0.01 to 1.0 wt.-% of an acid, 70.0 to 95.0 wt.-% of a liquid and 1.0 to 10 g/l of a gas, wherein the pH of the food product is in a range of 2.5 to 5.0, the structure of the gel is such that the gas bubbles are trapped in the gel matrix, and wherein the food product has a viscosity comprised between 20 000 and 300 000 centipoise as measured in a Brookfield viscosimeter with a module 93-C at a speed of 5 rpm at 8°C.

2. The food product according to claim 1 comprising, 0.5 to 2.5 wt.-% of pectin, 0.1 to 0.5 wt.-% of the acid, 80 to 90 wt.-% of the liquid and 2.0 to 5.0 g/l of the gas.

3. The food product according to claim 1 and/or 2 wherein the pH is in a range of 3 to 4.5.

4. The food product according to any one of claims 1 to 3 wherein the acid is an organic or inorganic acid.

5. The food product according to claim 4 wherein the organic acid is selected from citric acid, acetic acid, lactic acid, and mixtures thereof.

6. The food product according to claim 4 wherein the inorganic acid is selected from phosphoric acid, carbonic and mixtures thereof.

7. The food product according to any one of claims 1 to 6 wherein the gas is selected from CO₂, N₂, O₂ and mixtures thereof.

8. The food product according to any one of claims 1 to 7 wherein the liquid is selected from water, fruit juice, fruit pulp, coffee, tea, milk, soy based drinks, natural extracts, chocolate based drinks or smoothies.

9. The food product according to any one of claims 1 to 8 further comprising up to 20 wt.-%, preferably 3.0 to 15.0 wt.-% of a natural sugar selected from sucrose, saccharose, all types of glucose syrup or fructose syrup.

10. The food product according to any of claims 1 to 9 further comprising at least one natural or artificial high intensity sweetener selected from the list comprising stevia extracts, Rebaudioside A, aspartame, neotame, acesulfame, sucralose, saccharin.

11. The food product according to any one of claims 1 to 10 further comprising up to 2.0 wt.-%, preferably 0.1 to 1.0 wt.-% of a flavouring agent.

12. The food product according to any one of claims 1 to 11 further containing up 10 wt.-%, preferably 1 to 8 wt.-% of ethanol.

13. A process for the preparation of a spoonable gas-containing food product having a gel texture wherein the gas bubbles are trapped in the gel matrix, comprising the steps of:
(i) mixing 0.1 to 5.0 wt.-% of a pectin, an acid, 70.0 to 95.0 wt.-% of a liquid and optionally at least one of sweeteners and flavouring agents;
(ii) pasteurizing the mixture;
(iii) injecting 1.0 to 10 g/l of the gas to form a gas-containing product;
(iv) holding the gas containing product for a period between 0.25 to 5;
(v) storing the product under isobaric conditions and
(vi) filling the product in containers under non-isobaric conditions while simultaneously adding 0.01 to 1 wt.-% of an acid
wherein the food product has a viscosity comprised between 20 000 and 300 000 centipoise as measured in a Brookfield viscosimeter with a module 93-C at a speed of 5 rpm at 8°C.

14. The process according to claim 13 wherein the gas injection is carried out a pressure of 50 to 400, preferably 80 to 200 kPa.

15. The process according to claim 13, wherein, in the mixing step, an acid selected from organic and inorganic acids, a liquid selected from water, fruit juice, fruit pulp, coffee, tea, milk and derivates, soy based drinks, natural extracts, chocolate based drinks or smoothies, and a gas selected from CO₂ N₂, O₂, preferably CO₂, and mixtures thereof are used.

## Patentansprüche

1. Löffelbares gashaltiges Nahrungsprodukt mit einer Geltextur, mit 0,1 bis 5,0 Gew.-% Pektin, 0,01 bis 1,0 Gew.-% einer Säure, 70,0 bis 95,0 Gew.-% einer Flüssigkeit und 1,0 bis 10 g/l eines Gases, wobei der pH des Nahrungsproduktes im Bereich von 2,5 bis 5,0 liegt, die Struktur des Gels derart ist, dass die Gasbläschen in der Gelmatrix eingeschlossen sind, und wobei das Nahrungsprodukt eine Viskosität zwischen 20 000 und 300 000 Centipoise aufweist, wie in einem Brookfield Viskosimeter mit einem Module 93-C mit einer Geschwindigkeit von 5 U/min bei 8°C gemessen.

2. Nahrungsprodukt gemäß Anspruch 1, mit 0,5 bis 2,5 Gew.-% Pektin, 0,1 bis 0,5 Gew.-% der Säure, 80 bis 90 Gew.-% der Flüssigkeit und 2,0 bis 5,0 g/l des Gases.

3. Nahrungsprodukt gemäß Anspruch 1 und/oder 2, wobei der pH in einem Bereich von 3 bis 4,5 liegt.

4. Nahrungsprodukt gemäß einem der Ansprüche 1 bis 3, wobei die Säure aus einer organischen oder anorganischen Säure besteht.

5. Nahrungsprodukt gemäß Anspruch 4, wobei die organische Säure aus Zitronensäure, Essigsäure, Milchsäure und Mischungen aus diesen ausgewählt ist.

6. Nahrungsprodukt gemäß Anspruch 4, wobei die anorganische Säure aus Phosphorsäure, Kohlensäure und Mischungen aus diesen ausgewählt ist.

7. Nahrungsprodukt gemäß einem der Ansprüche 1 bis 6, wobei das Gas aus CO₂, N₂, O₂ und Mischungen aus diesen ausgewählt ist.

8. Nahrungsprodukt gemäß einem der Ansprüche 1 bis 7, wobei die Flüssigkeit aus Wasser, Fruchtsaft, Fruchtmark, Kaffee, Tee, Milch, Getränken auf Sojabasis, natürlichen Extrakten, Getränken auf Schokoladenbasis oder so genannten Smoothies ausgewählt ist.

9. Nahrungsprodukt gemäß einem der Ansprüche 1 bis 8, weiterhin mit bis zu 20 Gew.-%, vorzugsweise 3,0 bis 15,0 Gew.-% eines natürlichen Zuckers ausgewählt aus Sucrose, Saccharose, allen Arten von Glukosesirup oder Fruktosesirup.

10. Nahrungsprodukt gemäß einem der Ansprüche 1 bis 9, weiterhin mit mindestens einem natürlichen oder künstlichen Süßstoff mit erhöhter Süßkraft ausgewählt aus der Liste enthaltend Stevia-Extrakte, Rebaudiosid A, Aspartam, Neotam, Acesulfam, Sucralose, Saccharin.

11. Nahrungsprodukt gemäß einem der Ansprüche 1 bis 10, weiterhin mit bis zu 2,0 Gew.-%, vorzugsweise 0,1 bis 1,0 Gew.-% eines Aromastoffes.

12. Nahrungsprodukt gemäß einem der Ansprüche 1 bis 11, weiterhin mit bis zu 10 Gew.-%, vorzugsweise 1 bis 8 Gew.-% Ethanol.

13. Verfahren zur Zubereitung eines löffelbaren, gashaltigen Nahrungsproduktes mit einer Geltextur, wobei die Gasbläschen in der Gelmatrix eingeschlossen sind, mit den folgenden Schritten:
(i) Vermischen von 0,1 bis 5,0 Gew.-% eines Pektins, einer Säure, 70,0 bis 95,0 Gew.-% einer Flüssigkeit und wahlweise mindestens entweder einem Süßstoff oder einem Aromastoff;
(ii) Pasteurisieren der Mischung;
(iii) Einspritzen von 1,0 bis 10 g/l des Gases zur Bildung eines gashaltigen Produktes;
(iv) Halten des gashaltigen Produktes über einen Zeitraum zwischen 0,25 und 5;
(v) Lagern des Produktes unter isobaren Bedingungen und
(vi) Füllen des Produktes in Behälter unter nicht isobaren Bedingungen, während gleichzeitig 0,01 bis 1 Gew.-% einer Säure zugesetzt wird,
wobei das Nahrungsprodukt eine Viskosität zwischen 20 000 und 300 000 Centipoise aufweist, wie in einem Brookfield Viskosimeter mit einem Module 93-C mit einer Geschwindigkeit von 5 U/min bei 8°C gemessen.

14. Verfahren gemäß Anspruch 13, wobei die Gaseinspritzung bei einem Druck von 50 bis 400, vorzugsweise 80 bis 200 kPa durchgeführt wird.

15. Verfahren gemäß Anspruch 13, wobei in dem Mischschritt eine Säure ausgewählt aus organischen und anorganischen Säuren, eine Flüssigkeit ausgewählt aus Wasser, Fruchtsaft, Fruchtmark, Kaffee, Tee, Milch und Derivaten, Getränken auf Sojabasis, natürlichen Extrakten, Getränken auf Schokoladenbasis oder Smoothies, und ein Gas ausgewählt aus CO₂, N₂, O₂, vorzugsweise CO₂, sowie Mischungen aus diesen verwendet werden.

## Revendications

1. Un produit alimentaire contenant du gaz ayant une texture de gel et pouvant être mangé à la cuillère, comprenant de 0.1 à 5.0 % en masse de pectine, de 0.01 à 1.0 % en masse d'un acide, de 70.0 à 95.0 % en masse d'un liquide et de 1.0 à 10 g/l d'un gaz, dans lequel le pH du produit alimentaire est compris dans l'intervalle de 2.5 à 5.0, la structure du gel est telle que les bulles de gaz sont piégées dans la matrice de gel, et dans lequel le produit alimentaire a une viscosité comprise entre 20 000 et 300 000 centipoises lorsque mesurée dans un viscosimètre Brookfield avec un module 93-C à une vitesse de 5 tr/min à 8°C.

2. Le produit alimentaire selon la revendication 1 comprenant, de 0.5 à 2.5 % en masse de pectine, de 0.1 à 0.5 % en masse de l'acide, de 80 à 90 % en masse du liquide et de 2.0 à 5.0 g/l du gaz.

3. Le produit alimentaire selon les revendications 1 et/ou 2 dans lequel le pH est compris dans l'intervalle de 3 à 4.5.

4. Le produit alimentaire selon l'une des revendications de 1 à 3 dans lequel l'acide est un acide organique ou un acide inorganique.

5. Le produit alimentaire selon la revendication 4 dans lequel l'acide organique est sélectionné parmi l'acide citrique, l'acide acétique, l'acide lactique et des mélanges de ces derniers.

6. Le produit alimentaire selon la revendication 4 dans lequel l'acide inorganique est sélectionné parmi l'acide phosphorique, l'acide carbonique et des mélanges de ces derniers.

7. Le produit alimentaire selon l'une des revendications de 1 à 6 dans lequel le gaz est sélectionné parmi CO₂, N₂, O₂ et des mélanges de ces derniers.

8. Le produit alimentaire selon l'une des revendications de 1 à 7 dans lequel le liquide est sélectionné parmi l'eau, le jus de fruit, la pulpe de fruit, le café, le thé, le lait, les boissons à base de soja, les extraits naturels, les boissons à base de chocolat ou les smoothies.

9. Le produit alimentaire selon l'une des revendications de 1 à 8 comprenant en outre jusqu'à 20 % en masse, de préférence de 3.0 à 15.0 % en masse d'un sucre naturel sélectionné parmi le sucrose, le saccharose, tous les types de sirop de glucose ou sirop de fructose.

10. Le produit alimentaire selon l'une des revendications de 1 à 9 comprenant en outre au moins un édulcorant puissant naturel ou artificiel sélectionné dans la liste comprenant les extraits de stévia, le rébaudioside A, l'aspartame, le néotame, l'acésulfame, le sucralose, la saccharine.

11. Le produit alimentaire selon l'une des revendications de 1 à 10 comprenant en outre jusqu'à 2.0 % en masse, de préférence de 0.1 à 1.0 % en masse d'un agent aromatisant.

12. Le produit alimentaire selon l'une des revendications de 1 à 11 comprenant en outre jusqu'à 10 % en masse, de préférence de 1 à 8 % en masse d'éthanol.

13. Un procédé pour la préparation d'un produit alimentaire contenant du gaz, ayant une texture de gel, pouvant être mangé à la cuillère et dans lequel les bulles de gaz sont piégées dans la matrice de gel, comprenant les étapes suivantes :
(i) mélanger de 0.1 à 5.0 % en masse de pectine, un acide, de 70.0 à 95.0 % en masse d'un liquide et facultativement au moins un des édulcorants et agents aromatisants ;
(ii) pasteuriser le mélange ;
(iii) injecter de 1.0 à 10 g/l du gaz pour former un produit contenant du gaz ;
(iv) tenir le produit contenant du gaz pendant une période de 0.25 à 5 ;
(v) conserver le produit sous conditions isobares et
(vi) verser le produit dans des récipients sous conditions non isobares tout en ajoutant simultanément de 0.01 à 1 % en masse d'un acide dans lequel le produit alimentaire à une viscosité comprise entre 20 000 et 300 000 centipoises lorsque mesurée dans un viscosimètre Brookfield avec un module 93-C à une vitesse de 5 tr/min à 8°C.

14. Le procédé selon la revendication 13 dans lequel l'injection de gaz est effectuée à une pression de 50 à 400, de préférence de 80 à 200 kPa.

15. Le procédé selon la revendication 13, dans lequel, à l'étape du mélange, un acide sélectionné parmi des acides organiques et inorganiques, un liquide sélectionné parmi l'eau, le jus de fruit, le café, le thé, le lait et ses dérivés, les boissons à base de soja, les extraits naturels, les boissons à base de chocolat ou les smoothies, et un gaz sélectionné parmi CO₂, N₂, O₂, de préférence CO₂, et des mélanges de ces derniers sont utilisés.
